(19) Europäisches Patentamt / European Patent Office / Office européen des brevets

(11) **EP 3 253 597 B1**

(12) **FASCICULE DE BREVET EUROPEEN**

(45) Date de publication et mention
de la délivrance du brevet:
**22.04.2020 Bulletin 2020/17**

(21) Numéro de dépôt: **16701179.0**

(22) Date de dépôt: **22.01.2016**

(51) Int Cl.:
**B60C 9/20** *(2006.01)*  **B60C 9/00** *(2006.01)*
**B60C 9/18** *(2006.01)*

(86) Numéro de dépôt international:
**PCT/EP2016/051303**

(87) Numéro de publication internationale:
**WO 2016/124417 (11.08.2016 Gazette 2016/32)**

(54) **PNEU RADIAL AYANT UNE STRUCTURE DE CEINTURE AMÉLIORÉE**

RADIALREIFEN MIT VERBESSERTER GÜRTELSTRUKTUR

RADIAL TYRE HAVING AN IMPROVED BELT STRUCTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.02.2015 FR 1550812**

(43) Date de publication de la demande:
**13.12.2017 Bulletin 2017/50**

(73) Titulaire: **Compagnie Générale des
Etablissements Michelin
63000 Clermont-Ferrand (FR)**

(72) Inventeurs:
• **LARDJANE, Aurore
63040 Clermont-Ferrand Cedex 9 (FR)**
• **ASTAIX, Camille
63040 Clermont-Ferrand Cedex 9 (FR)**

(74) Mandataire: **Louret, Sylvain
M.F.P. MICHELIN
Service juridique - Propriété Intellectuelle
CBS/CORP/J/PI - F35 - Site de Ladoux
23, place des Carmes - Déchaux
63040 Clermont-Ferrand Cedex 9 (FR)**

(56) Documents cités:
EP-A1- 0 621 143    EP-A1- 2 505 386
EP-A2- 2 123 480    EP-A2- 2 380 754
FR-A1- 3 008 998

**Description**

1. DOMAINE DE L'INVENTION

La présente invention est relative aux pneumatiques pour véhicules, et à leur armature de sommet ou ceinture. Elle se rapporte plus particulièrement aux stratifiés composites multicouche utilisés dans la ceinture de tels pneumatiques notamment pour véhicule tourisme ou camionnette.

2. ETAT DE LA TECHNIQUE

Un pneumatique à armature de carcasse radiale pour véhicule tourisme ou camionnette comporte, on le sait, une bande de roulement, deux bourrelets inextensibles, deux flancs souples reliant les bourrelets à la bande de roulement et une armature de sommet rigide ou « ceinture » (*"belt"*) disposée circonférentiellement entre l'armature de carcasse et la bande de roulement.

La ceinture de pneumatique est généralement constituée par au moins deux nappes de caoutchouc dites « nappes de travail », « nappes de triangulation » ou encore « armature de travail », superposées et croisées, renforcées le plus souvent de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au pneu une rigidité ou poussée de dérive (en anglais, *"drift thrust"* ou *"cornering"*) élevée, nécessaire de manière connue pour l'obtention d'un bon comportement routier (*"handling"*) sur véhicule automobile.

La ceinture ci-dessus, ce qui est particulièrement le cas pour les pneumatiques susceptibles de rouler à haute vitesse de manière soutenue, peut comporter en outre une nappe de caoutchouc additionnelle au-dessus des nappes de travail (côté bande de roulement), dite « nappe de frettage » ou « armature de frettage », qui est renforcée généralement par des fils de renforcement dits « circonférentiels », c'est-à-dire que ces fils de renforcement sont disposés pratiquement parallèles les uns aux autres et s'étendent sensiblement circonférentiellement autour de l'enveloppe pneumatique de manière à former un angle préférentiellement compris dans un domaine de -5° à +5° avec le plan circonférentiel médian. Ces fils de renforcement circonférentiels ont pour fonction première, on le rappelle, de résister à la centrifugation du sommet à haute vitesse.

De telles structures de ceintures, consistant finalement en un stratifié composite multicouche comportant au moins une nappe de frettage, le plus souvent textile, et deux nappes de travail généralement métalliques, sont bien connues de l'homme du métier et ne nécessitent pas d'être décrites ici plus en détail.

L'état de la technique général décrivant de telles structures de ceintures est illustré en particulier par les documents brevet US 4 371 025, FR 2 504 067 ou US 4 819 705, EP 738 615, EP 795 426 ou US 5 858 137, EP 1 162 086 ou US 2002/0011296, EP 1 184 203 ou US 2002/0055583.

La disponibilité en aciers de plus en plus résistants et endurants fait que les manufacturiers de pneumatiques s'orientent aujourd'hui, autant que possible, vers l'emploi dans les ceintures de pneumatiques de câbles à structure très simple, notamment à seulement deux fils, voire même de filaments unitaires, afin d'une part de simplifier la fabrication et diminuer les coûts, d'autre part de diminuer l'épaisseur des nappes de renforcement et ainsi l'hystérèse des pneumatiques, en fin de compte réduire la consommation d'énergie des véhicules équipés de tels pneumatiques.

Les efforts visant à réduire la masse des pneumatiques, en particulier par une réduction d'épaisseur de leur ceinture et des couches de caoutchouc la constituant, se heurtent toutefois, bien naturellement, à des limites physiques qui peuvent donner lieu à un certain nombre de difficultés. Il peut notamment se produire que la fonction de frettage apportée par l'armature de frettage et celle de rigidification apportée par l'armature de travail ne soient plus suffisamment différenciées l'une de l'autre et puissent se perturber mutuellement. Ceci est préjudiciable au bon fonctionnement du sommet du pneumatique, à la performance et l'endurance globale du pneumatique.

C'est ainsi que les demandes de brevet WO 2013/117476 et WO 2013/117477 déposées par les Demanderesses ont proposé un stratifié composite multicouche de structure spécifique qui permet d'alléger notablement la ceinture des pneumatiques, et donc d'abaisser leur résistance au roulement, tout en palliant les inconvénients cités ci-dessus.

Ces demandes divulguent un pneumatique radial, définissant trois directions principales, circonférentielle, axiale et radiale, comportant un sommet surmonté d'une bande de roulement, deux flancs, deux bourrelets, chaque flanc reliant chaque bourrelet au sommet, une armature de carcasse ancrée dans chacun des bourrelets et s'étendant dans les flancs et dans le sommet, une armature de sommet ou ceinture s'étendant dans le sommet selon la direction circonférentielle et située radialement entre l'armature de carcasse et la bande de roulement, ladite ceinture comportant un stratifié composite multicouche comportant au moins trois couches superposées de renforts, lesdits renforts étant dans chaque couche unidirectionnels et noyés dans une épaisseur de caoutchouc, avec notamment :

- côté bande de roulement, une première couche de caoutchouc comportant une première rangée de renforts, orientés selon un angle alpha de -5 à +5 degrés par rapport à la direction circonférentielle, ces renforts dits premiers renforts étant en matériau textile thermorétractile ;
- au contact de la première couche et disposée sous cette dernière, une deuxième couche de caoutchouc comportant une deuxième rangée de renforts, orientés selon un angle beta donné, positif ou négatif, compris entre 10 et 30 degrés par rapport à la direction circonférentielle, ces renforts dits deuxièmes renforts étant des renforts métalliques ;
- au contact de la deuxième couche et disposée sous cette dernière, une troisième couche de caoutchouc comportant une troisième rangée de renforts, orientés selon un angle gamma opposé à l'angle beta, lui-même compris entre 10 et 30 degrés par rapport à la direction circonférentielle, ces renforts dits troisièmes renforts étant des renforts métalliques.

Les premiers renforts sont constitués de fibres multifilamentaires, en polyamide ou en polyester, retordues ensemble de manière conventionnelle sous forme de cordes textiles. Les deuxièmes et troisièmes renforts consistent quant à eux en des mono filaments en acier, en particulier en acier au carbone à très haute résistance.

Les demandes de brevet ci-dessus ont démontré qu'il était possible, grâce à la construction spécifique de leur stratifié multicouche, notamment à l'utilisation de renforts circonférentiels textiles dont la thermorétractabilité est contrôlée et de renforts métalliques sous forme de mono fils unitaires de faible diamètre, de réduire de manière notable l'épaisseur globale des ceintures de pneumatiques, et ceci sans nuire à la bonne mise en œuvre et à la différentiation des fonctions d'une part de frettage apportées par les renforts circonférentiels de la première couche, d'autre part de rigidification apportées par les renforts métalliques des deux autres couches.

Ainsi, peuvent être diminués le poids des pneumatiques et leur résistance au roulement, à coût réduit grâce à l'utilisation de monofilaments en acier ne nécessitant aucune opération d'assemblage préalable, ceci sans pénaliser la rigidité de dérive et donc le comportement routier, ni l'endurance globale en roulage.

Il s'est avéré néanmoins à l'usage, selon les conditions particulières de mise en œuvre des stratifiés multicouche décrits dans les demandes ci-dessus, que la réduction des épaisseurs des (première, deuxième et troisième) couches de caoutchouc pouvait se heurter ici ou là au risque de contact direct, sinon de trop grande proximité, selon la direction radiale (Z), entre les renforts de ces différentes couches. Ceci peut être préjudiciable au bon fonctionnement, à l'endurance à long terme du stratifié composite multicouche.

Par exemple, un contact direct ou une trop grande proximité entre d'une part les fils circonférentiels textiles, dont on sait qu'ils contiennent naturellement une certaine quantité d'eau, variable selon la nature du matériau textile thermorétractile, et d'autre part les mono filaments en acier, pourrait engendrer une corrosion de surface de ces derniers, sans parler d'un risque de dégradation de l'adhésion avec le caoutchouc environnant.

Un contact direct entre les monofilaments en acier de la deuxième couche avec ceux de la troisième couche, pour rappel croisés les uns par rapport aux autres dans l'armature de travail, pourrait entraîner quant à lui un frottement répété et une usure prématurée de ces mono filaments en conditions de travail, finalement un risque de dégradation de l'endurance globale de cette armature de travail après un roulage prolongé des pneumatiques.

Le document EP 2 380 754 décrit une ceinture située en circonférence du pneumatique et comprenant au moins un câble composé d'au moins un premier filament et d'un filament métallique, le module de Young du premier filament étant inférieur au module de Young du filament métallique à température ambiante.

Le document EP 2 505 386 enseigne un pneumatique comprenant une nappe circonférentielle et deux nappes de travail, l'angle d'inclinaison des câbles de renfort de la seconde nappe de travail étant opposé et de plus faible valeur absolue que l'angle d'inclinaison des câbles de renfort de la première nappe de travail par rapport à la direction circonférentielle.

Le document FR 3 008 998 décrit un produit renforcé à faible épaisseur et un pneumatique comprenant ce produit, le produit renforcé comprenant une matrice élastomère, et plusieurs éléments de renforts comprenant au moins un élément filaire revêtu d'une gaine d'une composition thermoplastique noyés dans la matrice.

Le document EP 0 621 143 décrit une ceinture située en circonférence du pneumatique et comprenant au moins un câble composé d'au moins un filament aramide constitué de fibres aramides torsadées et d'un monofilament acier.

Le document EP 2 123 480 décrit une nappe de renforcement recouverte de films minces constitués d'une résine thermoplastique ou d'un élastomère thermoplastique.

3. BREVE DESCRIPTION DE L'INVENTION

Poursuivant leurs recherches, les Demanderesses ont mis au point un stratifié composite multicouche amélioré, d'architecture nouvelle, qui permet de pallier, au moins en partie, les problèmes précités dus à des risques de contact direct entre les renforts, et qui peut remplacer avantageusement les stratifiés décrits dans les deux demandes WO 2013/117476 et WO 2013/117477.

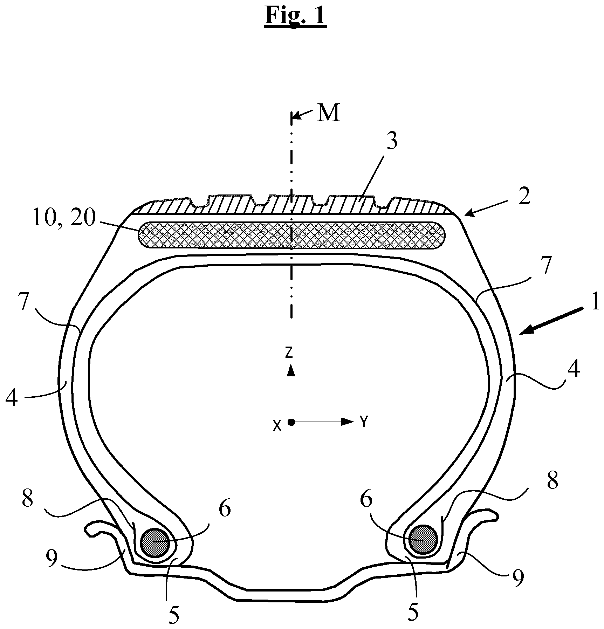

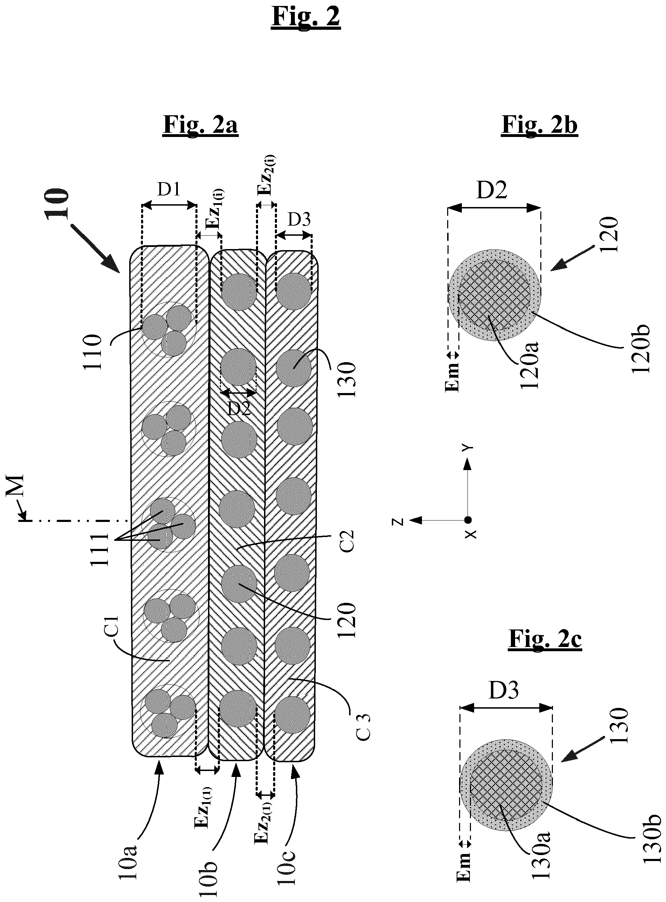

Ainsi, selon un premier objet, la présente invention concerne (selon les références données aux figures 1 et 2 annexées) un pneumatique radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10, 20) s'étendant dans le sommet (2) selon la direction circonférentielle (X) et situé radialement entre l'armature de carcasse (7) et la bande de roulement (3), ladite ceinture (10) comportant un stratifié composite multicouche (10a, 10b, 10c; 20a, 20b, 20c) comportant au moins trois couches superposées de renforts (110, 120, 130; 110, 125, 135), lesdits renforts étant dans chaque couche unidirectionnels et noyés dans une épaisseur de caoutchouc (respectivement C1, C2, C3), avec :

- côté bande de roulement, une première couche (10a, 20a) de caoutchouc (C1) comportant une première rangée de renforts (110, 111), orientés selon un angle alpha de -5 à +5 degrés par rapport à la direction circonférentielle (X), ces renforts (110, 111) dits premiers renforts étant en matériau textile thermorétractile ;
- au contact de la première couche (10a, 20a) et disposée sous cette dernière, une deuxième couche (10b, 20b) de caoutchouc (C2) comportant une deuxième rangée de renforts (120, 125), orientés selon un angle beta donné, positif ou négatif, compris entre 10 et 30 degrés par rapport à la direction circonférentielle (X), ces renforts (120, 125) dits deuxièmes renforts ayant un diamètre ou épaisseur, noté(e) D2, compris(e) entre 0,20 mm et 0,50 mm ;
- au contact de la deuxième couche (10b, 20b) et disposée sous cette dernière, une troisième couche (10c, 20c) de caoutchouc (C3) comportant une troisième rangée de renforts (130, 135), orientés selon un angle gamma opposé à l'angle beta, lui-même compris entre 10 et 30 degrés par rapport à la direction circonférentielle (X), ces renforts (130, 135) dits troisièmes renforts ayant un diamètre ou épaisseur, noté(e) D3, compris(e) entre 0,20 mm et 0,50 mm,

caractérisé en ce que tout ou partie des deuxièmes et/ou troisièmes renforts sont des renforts composites comportant des mono filaments en acier (120a, 130a; 125a, 135a) qui sont recouverts d'une gaine (120b, 130b; 125b, 135b) d'une matière thermoplastique dont la température de transition vitreuse Tg est supérieure à 20°C.

L'invention offre ainsi la possibilité, selon les applications particulières visées, de maintenir à un bas niveau voire même de réduire encore l'épaisseur des ceintures de pneumatiques et celle des couches de caoutchouc constituant une partie de leur structure, donc *in fine* le poids et la résistance au roulement des pneumatiques, sans risque de contact direct entre les différents renforts.

La gaine thermoplastique constitue en outre une barrière efficace contre les agents corrosifs susceptibles de pénétrer dans le stratifié multicouche en cas d'agressions du pneumatique. En outre, cette gaine présentant une rigidité intermédiaire entre la rigidité des monofils en acier et la rigidité de la matrice de caoutchouc les enrobant, les contraintes exercées aux interfaces sont réduites, ce qui est susceptible d'améliorer encore l'endurance globale du stratifié multicouche du pneumatique de l'invention.

Le stratifié composite multicouche selon l'invention est utilisable comme élément de renforcement de ceinture de tout type de pneumatique, particulièrement pour véhicule tourisme incluant notamment les véhicules 4x4 et "SUV" (*Sport Utility Vehicles*) ou pour véhicule camionnette.

L'invention ainsi que ses avantages seront aisément compris à la lumière de la description détaillée et des exemples de réalisation qui suivent, ainsi que des figures 1 à 4 relatives à ces exemples qui schématisent (sauf indication contraire, sans respect d'une échelle spécifique) :

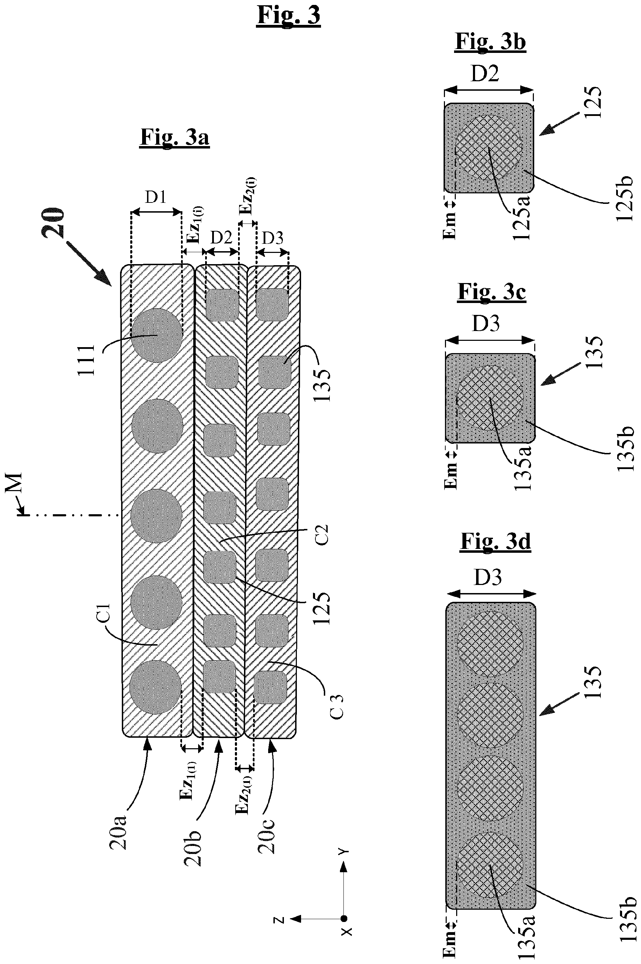

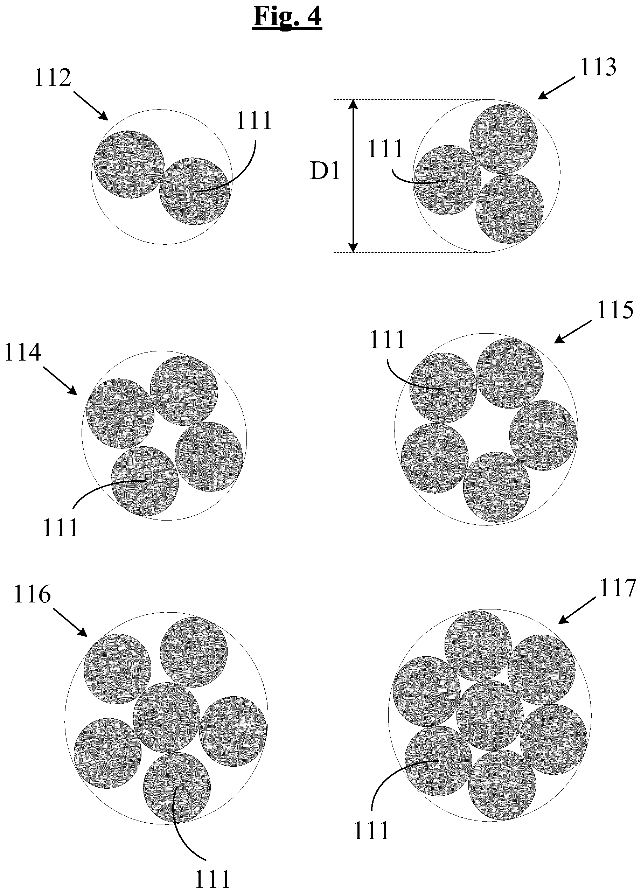

- en coupe radiale (c'est-à-dire selon un plan contenant l'axe de rotation du pneumatique), un exemple de pneumatique (1) conforme à l'invention, incorporant dans sa ceinture (10, 20) un stratifié composite multicouche conformément à l'invention (Fig. 1) ;
- en coupe transversale, un exemple de stratifié (10) composite multicouche (10a, 10b, 10c) utilisable dans le pneu (1) conforme à l'invention, incorporant les renforts (110) en matériau textile thermorétractile sous la forme d'un assemblage de monofilaments (111) et des renforts (respectivement 120, 130) sous la forme de renforts composites constitués de monofilaments en acier (120a, 130a) recouverts d'une gaine (respectivement 120b, 130b) d'une matière thermoplastique (Fig. 2 et Fig. 2a, 2b et 2c);
- en coupe transversale, un autre exemple de stratifié (20) composite multicouche (20a, 20b, 20c) utilisable dans le pneu (1) conforme à l'invention, incorporant les renforts (110) en matériau textile thermorétractile sous la forme d'un mono filament unitaire (111) et des renforts (125, 135) sous la forme de renforts composites constitués de monofilaments en acier (125a, 135a) recouverts d'une gaine (respectivement 125b, 135b) d'une matière thermoplastique (Fig. 3 ; Fig. 3a, 3b, 3c et 3d) ;
- en coupe transversale, différents exemples possibles d'assemblages de mono filaments (111) en matériau textile thermorétractile, utilisables comme renforts (110) dans la première couche (10a, 20a) du stratifié composite multicouche selon l'invention (Fig. 4).

4. <u>DEFINITIONS</u>

Dans la présente demande, on entend par :

- "caoutchouc" ou "élastomère" (les deux termes étant considérés comme synonymes) : tout type d'élastomère, qu'il soit du type diénique ou du type non diénique par exemple thermoplastique ;
- "composition de caoutchouc" ou "composition caoutchouteuse" : une composition qui comporte au moins un caoutchouc et une charge ;
- "couche" : une feuille, bande ou tout autre élément d'épaisseur relativement faible par rapport à ses autres dimensions, de préférence dont le rapport de l'épaisseur sur la plus grande des autres dimensions est inférieur à 0,5, plus préférentiellement inférieur à 0,1;
- "direction axiale" : une direction sensiblement parallèle à l'axe de rotation du pneumatique ;
- "direction circonférentielle" : une direction qui est sensiblement perpendiculaire à la fois à la direction axiale et à un rayon du pneumatique (en d'autres termes, tangente à un cercle dont le centre est sur l'axe de rotation du pneumatique) ;
- "direction radiale" : une direction selon un rayon du pneumatique, c'est-à-dire une direction quelconque passant par l'axe de rotation du pneumatique et sensiblement perpendiculairement à cette direction, c'est-à-dire faisant avec une perpendiculaire à cette direction un angle ne s'écartant pas de plus de 5 degrés ;
- "monofilament" ou indistinctement "monofil", de manière générale, tout filament unitaire, quelle que soit la forme de sa section droite, dont le diamètre (cas d'une section droite circulaire) ou l'épaisseur (cas d'une section droite non circulaire) sont supérieurs à 100 $\mu$m. Cette définition couvre aussi bien des mono fils, qu'ils soient textiles ou métalliques, de forme essentiellement cylindrique (à section droite circulaire) que des monofilaments de forme différente, par exemple des monofilaments oblongs (de forme aplatie), ou de section droite rectangulaire ou carrée ;
- "orienté selon un axe ou une direction" en parlant d'un élément quelconque tel qu'un renfort, un élément qui est orienté sensiblement parallèlement à cet axe ou cette direction, c'est-à-dire faisant avec cet axe ou cette direction un angle ne s'écartant pas de plus de 5 degrés (donc nul ou au plus égal à 5 degrés) ;
- "orienté perpendiculairement à un axe ou une direction" : en parlant d'un élément quelconque tel qu'un renfort, un élément qui est orienté sensiblement perpendiculairement à cet axe ou cette direction, c'est-à-dire faisant avec une perpendiculaire à cet axe ou cette direction un angle ne s'écartant pas de plus de 5 degrés ;
- "plan circonférentiel médian" (noté M) : le plan perpendiculaire à l'axe Y de rotation du pneumatique qui est situé à mi-distance des deux bourrelets et passe par le milieu de l'armature de sommet ou ceinture ;
- "renfort" ou "fil de renforcement" : tout brin long et fin c'est-à-dire filiforme, longiligne, de grande longueur relativement à sa section transversale, notamment tout filament unitaire, toute fibre multifilamentaire ou tout assemblage de tels filaments ou fibres tels qu'un retors ou un câble, ce brin ou fil pouvant être rectiligne comme non rectiligne, par exemple torsadé, ou ondulé, un tel brin ou fil étant susceptible de renforcer une matrice de caoutchouc (c'est-à-dire augmenter les propriétés en traction de la matrice) ;
- "renforts unidirectionnels" : des renforts essentiellement parallèles entre eux, c'est-à-dire orientés selon un même axe ;
- "stratifié" ou "stratifié multicouche" : au sens de la classification internationale des brevets, tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage.

D'autre part, sauf indication expresse différente, tous les pourcentages (%) indiqués sont des % en masse.

L'expression « x et/ou y » signifie « x » ou « y » ou les deux (c'est-à-dire « x et y »). Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »).

5. <u>DESCRIPTION DETAILLEE ET EXEMPLES DE REALISATION DE L'INVENTION</u>

A titre d'exemple, la figure 1 représente de manière très schématique (c'est-à-dire sans respect d'une échelle spécifique) une coupe radiale d'un pneumatique conforme à l'invention, par exemple pour véhicule du type tourisme ou camionnette, dont la ceinture comporte un stratifié composite multicouche selon l'invention.

Ce pneumatique (1) conforme à l'invention, définissant trois directions perpendiculaires, circonférentielle (X), axiale (Y) et radiale (Z), comporte un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10, 20) s'étendant dans le sommet (2) selon la direction circonférentielle (X) et situé radialement entre l'armature de carcasse (7) et la bande de roulement (3). L'armature de carcasse (7) est de manière connue constituée d'au moins une nappe de caoutchouc renforcée par des câblés textiles dits "radiaux", disposés pratiquement parallèles les uns aux autres et s'étendent d'un bourrelet à l'autre de manière à former un angle généralement compris entre 80° et 90° avec le plan circonférentiel médian M; elle est ici, à titre d'exemple, enroulée autour de deux tringles (6) dans chaque bourrelet (5), le retournement (8) de cette armature (7) étant par exemple disposé vers l'extérieur du pneumatique (1) qui est ici représenté monté sur sa jante (9).

Selon la présente invention, conformément aux représentations des figures 2 et 3 qui seront détaillées ultérieurement, la ceinture (10, 20) du pneumatique (1) comporte un stratifié composite multicouche comportant trois couches (10a, 10b, 10c ; 20a, 20b, 20c) superposées de renforts, lesdits renforts étant dans chaque couche unidirectionnels et noyés dans une épaisseur de caoutchouc (respectivement C1, C2, C3), avec :

- côté bande de roulement, une première couche (10a, 20a) de caoutchouc (C1) comportant une première rangée de renforts (110), orientés selon un angle alpha de -5 à +5 degrés par rapport à la direction circonférentielle (X), ces renforts (110) dits premiers renforts étant en matériau textile thermorétractile ;
- au contact de la première couche (10a, 20a) et disposée sous cette dernière, une deuxième couche (10b, 20b) de caoutchouc (C2) comportant une deuxième rangée de renforts (120, 125), orientés selon un angle beta donné, positif ou négatif, compris entre 10 et 30 degrés par rapport à la direction circonférentielle (X), ces renforts (120, 125) dits deuxièmes renforts ayant un diamètre ou épaisseur, noté(e) D2, compris(e) entre 0,20 mm et 0,50 mm ;
- au contact de la deuxième couche (10b, 20b) et disposée sous cette dernière, une troisième couche (10c, 20c) de caoutchouc (C3) comportant une troisième rangée de renforts (130, 135), orientés selon un angle gamma opposé à l'angle beta, lui-même compris entre 10 et 30 degrés par rapport à la direction circonférentielle (X), identique à ou différent de l'angle beta, ces renforts (130, 135) dits troisièmes renforts ayant un diamètre ou épaisseur, noté(e) D3, compris(e) entre 0,20 mm et 0,50 mm.

Selon l'invention, les angles β et y de sens opposés, tous deux compris entre 10° et 30°, peuvent être identiques ou différents, c'est-à-dire que les deuxièmes (120, 125) et troisièmes (130, 135) renforts peuvent être disposés symétriquement ou pas, de part et d'autre du plan circonférentiel médian (M) précédemment défini.

Dans ce pneumatique schématisé à la figure 1, on comprendra bien entendu que la bande de roulement (3), le stratifié multicouche (10, 20) et l'armature de carcasse (7) peuvent être ou non au contact les uns des autres, même si ces parties ont été volontairement séparées sur la figure 1, schématiquement, pour des raisons de simplification et de clarté du dessin. Elles pourraient être séparées physiquement, tout au moins pour une partie d'entre elles, par exemple par des gommes de liaison, bien connues de l'homme du métier, destinées à optimiser la cohésion de l'ensemble après cuisson ou réticulation.

Dans le pneu de l'invention, tout ou partie des deuxièmes (120, 125) et/ou troisièmes (130, 135) renforts sont des renforts composites constitués de monofilaments en acier (120a, 130a ; 125a, 135a) qui sont recouverts d'une gaine (120b, 130b; 125b, 135b) d'une matière thermoplastique, ces monofilaments, pour rappel, n'étant pas tordus, câblés ensemble mais utilisés à l'état unitaire.

La température de transition vitreuse Tg de la matière thermoplastique est supérieure à 20°C ; elle est préférentiellement supérieure à 50°C, plus préférentiellement supérieure à 70°C. Sa température de fusion (notée Tf) est préférentiellement supérieure à 150°C, plus préférentiellement supérieure à 200°C.

Tg et Tf sont mesurées de manière connue par DSC (*Differential Scanning Calorimetry),* au second passage, par exemple et sauf indications différentes spécifiées dans la présente demande, selon la norme ASTM D3418 de 1999 (appareil DSC "822-2" de Mettler Toledo ; atmosphère azote ; échantillons préalablement portés de la température ambiante (23°C) à 250°C (10°C/min), puis refroidis rapidement jusqu'à 23°C, avant enregistrement final de la courbe de DSC de 23°C à 250°C, selon une rampe de 10°C/min).

L'épaisseur minimale (notée Em) de la gaine thermoplastique (120b, 130b; 125b, 135b) recouvrant les monofilaments (120a, 130a; 125a, 135a) en acier des deuxièmes (120, 125) et/ou troisièmes (plus préférentiellement deuxièmes et troisièmes) renforts (130, 135) composites, telle que schématisée aux figures 2b, 2c, 3b, 3c et 3d, est de préférence comprise entre 5 et 150 μm, plus préférentiellement entre 10 et 100 μm, en particulier entre 15 et 50 μm.

Cette gaine thermoplastique présentant une rigidité intermédiaire entre la rigidité des monofils en acier et la rigidité de la matrice de caoutchouc les enrobant, les contraintes exercées aux interfaces sont réduites, ce qui est susceptible d'améliorer encore l'endurance globale du stratifié multicouche du pneumatique de l'invention.

Typiquement, la matière thermoplastique est un polymère ou une composition polymérique (c'est-à-dire une composition à base d'au moins un polymère et d'au moins un additif).

Ce polymère thermoplastique est choisi de préférence dans le groupe constitué par les polyamides, les polyesters, les polyimides et les mélanges de tels polymères ; plus particulièrement, ce polymère est un polyamide ou un polyester. Parmi les polyamides (aliphatiques), on peut citer notamment les polyamides 4-6, 6, 6-6, 11 ou 12. Parmi les polyesters, on peut citer plus particulièrement les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Au polymère ou mélange de polymères ci-dessus, peuvent être éventuellement ajoutés, pour constituer une composition polymérique, divers additifs tels que colorant, charge, plastifiant, antioxydant ou autre stabilisant. On pourra avantageusement ajouter à la matière thermoplastique ci-dessus, des composants compatibles, de préférence eux-mêmes thermoplastiques, susceptibles de favoriser l'adhésion à une matrice de caoutchouc diénique, par exemple des élastomères TPS (thermoplastiques styréniques) du type insaturés, notamment époxydés, tels que décrits par exemple dans les demandes WO 2013/117474 et WO 2013/117475.

Selon un mode de réalisation préférentiel, la gaine comprend une couche unique de matière thermoplastique. En variante, la gaine pourrait toutefois comprend plusieurs couches distinctes, au moins l'une d'entre elles, voire même toutes, étant matière thermoplastique. On pourra ainsi utiliser les différents matériaux et couches décrits dans les demandes WO2010/136389, WO2010/105975, WO2011/012521, WO2011/051204, WO2012/016757, WO2012/038340, WO2012/038341, WO2012/069346, WO2012/104279, WO2012/104280 et WO2012/104281.

Les deuxièmes (120, 125) et troisièmes (130, 135) renforts selon l'invention ont un diamètre (ou par définition une épaisseur si leur section droite n'est pas circulaire), respectivement noté D2 et D3, qui est compris entre 0,20 mm et 0,50 mm. D2 et D3 peuvent être identiques ou différents d'une couche à l'autre ; s'ils sont différents, D3 peut être supérieur à D2 ou bien inférieur à D2, selon les modes de réalisation particuliers de l'invention.

De préférence D2 et/ou D3 (plus préférentiellement D2 et D3) sont supérieurs à 0,25 mm et inférieurs à 0,40 mm. Plus préférentiellement, pour une endurance optimale du pneu de l'invention, notamment sous des conditions de roulage sévères, on préfère que D2 et/ou D3 (plus préférentiellement D2 et D3) soient compris dans un domaine de 0,28 à 0,35 mm.

De préférence, l'acier est un acier au carbone, tel que par exemple ceux utilisés dans les câbles type *"steel cords"* pour pneumatiques ; mais il est bien entendu possible d'utiliser d'autres aciers, par exemple des aciers inoxydables, ou d'autres alliages.

Selon un mode de réalisation préférentiel, lorsqu'un acier au carbone est utilisé, sa teneur en carbone (% en poids d'acier) est comprise dans un domaine de 0,5% à 1,2%, plus préférentiellement de 0,7% à 1,0%. L'invention s'applique en particulier à des aciers du type *steel cord* à résistance normale (dit "NT" pour *"Normal Tensile"*) ou à haute résistance (dit "HT" pour *"High Tensile "*), les (deuxièmes et troisièmes) renforts en acier au carbone possédant alors une résistance en traction (Rm) qui est de préférence supérieure à 2000 MPa, plus préférentiellement supérieure à 2500 MPa. L'invention s'applique également à des aciers du type *steel cord* à très haute résistance (dit "SHT" pour " *Super High Tensile "*), ultra-haute résistance (dit "UHT" pour *"Ultra High Tensile "* ou "MT" pour *"Mega Tensile "*), les (deuxièmes et troisièmes) renforts en acier au carbone possédant alors une résistance en traction (Rm) qui est de préférence supérieure à 3000 MPa, plus préférentiellement supérieure à 3500 MPa. L'allongement total à la rupture (At) de ces renforts, somme de l'allongement élastique et de l'allongement plastique, est de préférence supérieur à 2,0%.

Pour ce qui concerne les renforts (deuxième et troisièmes) en acier, les mesures de force à la rupture, de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu, avant gainage par la matière thermoplastique, d'une couche métallique améliorant par exemple les propriétés de mise en œuvre du monofilament d'acier, ou les propriétés d'usage du renfort et/ou du pneumatique eux-mêmes, telles que les propriétés d'adhésion, de résistance à la corrosion ou encore de résistance au vieillissement. L'acier peut être par exemple recouvert d'une couche de laiton (alliage Zn-Cu) ou de zinc; on rappelle notamment que lors du procédé de fabrication des fils, le revêtement de laiton ou de zinc facilite le tréfilage du fil, ainsi que le collage du fil avec le caoutchouc.

L'étape de gainage ou recouvrement des mono fils en acier par la matière thermoplastique est réalisée de manière bien connue de l'homme du métier, par exemple par passage du monofil, voire le cas échéant de plusieurs monofils disposés parallèlement, à travers une ou des filières de diamètre adapté, dans des têtes d'extrusion chauffées à des températures appropriées, ou encore dans un bain d'enduction contenant la matière thermoplastique mise préalablement en solution dans un solvant (ou mélange de solvants) organique approprié. En sortie de la tête d'extrusion, le ou les monofils ainsi gainés sont ensuite refroidis suffisamment de manière à solidifier la couche de matière thermoplastique, par exemple avec de l'air ou un autre gaz froid, ou par passage dans un bain d'eau suivi d'une étape de séchage. Avantageusement, avant dépôt de la gaine de matière thermoplastique, les monofils en acier peuvent être soumis à un traitement d'adhérisation afin d'améliorer l'adhésion ultérieure entre l'acier et la gaine thermoplastique.

Préférentiellement, la gaine de matière thermoplastique est ensuite pourvue d'une couche adhésive au regard de chaque couche de composition de caoutchouc avec laquelle elle est au contact. Pour faire adhérer le caoutchouc à cette matière thermoplastique, on pourra utiliser tout système adhésif approprié, par exemple une simple colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester ou en polyamide, comme par exemple les compositions adhésives décrites dans les demandes WO 2013/017421, WO 2013/017422, WO 2013/017423.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four ou tunnel chauffant (par exemple pendant 30 s à 180°C) et enfin traitement thermique (par exemple pendant 30 s à 230°C).

Avant l'encollage ci-dessus, il peut être avantageux d'activer la surface de la matière thermoplastique, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'électrons ; un traitement chimique pourra par exemple consister en un passage préalable dans un bain de résine époxy et/ou de composé isocyanate.

La surface de la matière thermoplastique étant en règle générale lisse, il peut être également avantageux d'ajouter un épaississant à la colle utilisée, afin d'améliorer la prise totale de colle du renfort multi-composite lors de son encollage.

L'homme du métier comprendra aisément que la connexion entre la gaine de matière thermoplastique et chaque couche de caoutchouc avec laquelle elle est au contact, est assurée définitivement lors de la cuisson (réticulation) finale du bandage auquel se destine le stratifié.

Selon un mode de réalisation préférentiel de l'invention, les monofils en acier gainés par la gaine thermoplastique représentent la majorité (par définition, majorité en nombre), plus préférentiellement la totalité, des deuxièmes (120, 125) renforts de la deuxième couche (10b, 20b) de caoutchouc (C2). Selon un autre mode de réalisation préférentiel, combiné ou non au précédent, les monofilaments en acier gainés par la gaine thermoplastique représentent la majorité, plus préférentiellement la totalité, des troisièmes renforts (130, 135) de la troisième couche (10c, 20c) de caoutchouc (C3).

Dans le pneu de l'invention, les premiers renforts (110) sont quant à eux en matériau textile thermorétractile. Leur diamètre d'encombrement (moyen) noté D1 est de préférence compris entre 0,20 mm et 1,20 mm, plus préférentiellement entre 0,30 mm et 1,00 mm, en particulier entre 0,40 mm et 0,80 mm; on entend de manière usuelle par diamètre d'encombrement le diamètre du cylindre de révolution imaginaire qui entoure de tels premiers renforts textiles (110) dans le cas où ces derniers ne sont pas à section droite circulaire.

Leur contraction thermique (notée CT), après 2 min à 185°C, est de préférence inférieure à 7,5%, plus préférentiellement inférieure à 7,0%, en particulier inférieure à 6,0%, valeurs qui se sont révélées préférables pour la stabilité de fabrication et de dimensionnement des enveloppes de pneumatiques, en particulier lors des phases de cuisson et refroidissement des ces dernières.

Il s'agit de la contraction relative de ces premiers renforts (110) dans les conditions énoncées ci-après du test. La grandeur CT est mesurée, sauf précisions différentes, selon la norme ASTM D1204-08, par exemple sur un appareil du type « TESTRITE », sous une prétension dite standard de 0,5 cN/tex (donc ramenée au titre ou densité linéique de l'échantillon testé). A longueur constante, on mesure également le maximum de la force de contraction (notée $F_C$) à l'aide du test ci-dessus, cette fois à une température de 180°C et sous 3% d'élongation. Cette force de contraction $F_C$ est préférentiellement supérieure à 20 N (Newton). Une force de contraction élevée s'est révélée particulièrement favorable à la capacité de frettage des premiers renforts (110) en matériau textile thermorétractile, vis-à-vis de l'armature de sommet du pneumatique lorsque ce dernier s'échauffe sous une haute vitesse de roulage.

Les grandeurs CT et $F_C$ ci-dessus peuvent être indistinctement mesurées sur les renforts textiles initiaux encollés avant leur incorporation dans le stratifié puis dans le pneu, ou bien mesurée sur ces renforts une fois extraits de la zone centrale du pneumatique vulcanisé et de préférence « dégommés » (c'est-à-dire débarrassés du caoutchouc qui les enrobe dans la couche C1).

Tout matériau textile thermorétractile convient, en particulier et préférentiellement un matériau textile vérifiant les caractéristiques de contraction CT énoncées ci-dessus convient.

De préférence, ce matériau textile thermorétractile est choisi dans le groupe constitué par les polyamides, les polyesters et les polycétones. Parmi les polyamides (ou nylons), on peut citer notamment les polyamides 4-6, 6, 6-6, 11 ou 12. Parmi les polyesters, on peut citer par exemple les PET (polyéthylène téréphthalate), PEN (polyéthylène naphtalate), PBT (polybutylène téréphthalate), PBN (polybutylène naphtalate), PPT (polypropylène téréphthalate), PPN (polypropylène naphtalate). Sont également utilisables, en particulier et préférentiellement dans la mesure où ils vérifient la caractéristique CT préconisée ci-dessus, des renforts hybrides constitués de deux (au moins deux) matériaux différents tels que par exemple des assemblages de monofilaments aramide/nylon, aramide/polyester, aramide/polycétone.

Plus préférentiellement, le matériau textile thermorétractile constitutif des premiers renforts (110) est un polyamide (nylon) ou un polyester.

Selon un mode de réalisation particulièrement préférentiel de l'invention, tout ou partie des premiers renforts (110) en matériau textile thermorétractile sont des monofils ou des assemblages de tels monofils, de tels monofils pris individuellement ayant un diamètre (ou, par définition, une épaisseur si le monofilament n'a pas une section droite sensiblement circulaire) noté φ qui est supérieur à 0,10 mm, de préférence compris entre 0,15 et 0,80 mm, en particulier entre 0,20 et 0,60 mm.

De préférence, ces monofils ou assemblages de monofils représentent la majorité, plus préférentiellement la totalité, des premiers (110) renforts de la première couche (10a) de caoutchouc (C1).

La figure 4 schématise en coupe transversale, différents exemples (112, 113, 114, 115, 116, 117) d'assemblages de (respectivement 2, 3, 4, 5, 6 et 7) monofils (111) en matériau textile thermorétractile tel que par exemple polyamide, polyester ou polycétone, utilisables comme renforts (110) dans la première couche (10a, 20a) du stratifié composite multicouche selon l'invention.

De tels assemblages et leurs procédés de fabrication sont bien connus de l'homme du métier ; ils ont été décrits dans de nombreux documents brevet, à titre d'exemples FR 1 495 730, FR 2 022 643 ou US 3 638 706, FR 2 577 478 ou US 4 724 881, EP 500 480 ou US 5 442 903. EP 517 870 ou US 5 427 165, WO 2010/143017, ou dans des publications telles que « Investigation of twisted monofilament cord properties made ofnylon 6.6 and polyester », B. Yilmaz, Fibers and Polymers 2011, vol. 12, N°8, 1091-1098.

Les monofils ou assemblages de monofils textiles thermorétractiles présentent l'avantage, comparativement à des cordes textiles formées de fibres multifilamentaires conventionnelles, de mieux protéger contre l'humidité le reste du stratifié composite multicouche, ainsi de limiter les risques de pénaliser l'adhésion entre les divers renforts du stratifié et leur matrice de caoutchouc environnante, sans compter les risques de corrosion de surface des mono filaments en acier.

Si des assemblages de monofils textiles sont utilisés, ils comportent de préférence 2 à 10, plus préférentiellement de 3 à 7 monofils. Pour la fabrication de ces assemblages, les monofils sont câblés, retordus ensemble selon des techniques bien connues, avec une torsion comprise de préférence entre 30 et 200 tr/m (tours par mètre), plus préférentiellement entre 30 et 100 tr/m, ces monofils étant de manière connue dépourvus, ou quasiment dépourvus, de torsion sur eux-mêmes.

Chaque couche (C1, C2, C3) de composition de caoutchouc (ou ci-après "couche de caoutchouc") constitutive du stratifié composite multicouche, est à base d'au moins un élastomère et une charge.

De préférence, le caoutchouc est un caoutchouc diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

Chaque composition de caoutchouc peut comporter un seul ou plusieurs élastomère(s) diénique(s), également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en œuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment des sels de cobalt, de nickel ou de lanthanide, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 $m^2$/g, de préférence de 30 à 400 $m^2$/g.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, chaque composition de caoutchouc présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Pour faire adhérer les premiers, deuxièmes et troisièmes renforts à leurs trois couches de caoutchouc respectives (C1, C2, C3) précédemment décrites, on pourra utiliser tout système adhésif approprié, par exemple une colle textile du type "RFL" (résorcinol-formaldéhyde-latex) ou équivalente pour ce qui concerne les premiers renforts textiles et les mono filaments en acier gainés par leur matière thermoplastique.

Le pneumatique de l'invention a pour autres caractéristiques préférentielles au moins une, de préférence les deux qui suivent :

- la densité $d_1$ des premiers renforts (110) dans la première couche de caoutchouc (C1), mesurée dans la direction axiale (Y), est comprise entre 70 et 130 fils/dm (décimètre, c'est-à-dire par 100 mm de couche de caoutchouc);
- la densité, notée $d_2$ et $d_3$, des deuxièmes (120) et troisièmes (130) renforts dans respectivement les deuxième (C2) et troisième (C3) couches de caoutchouc, mesurée dans la direction axiale (Y), est comprise entre 100 et 180 fils/dm.

Plus préférentiellement, au moins une, de préférence les deux caractéristiques suivantes sont vérifiées :

- la densité $d_1$ est comprise entre 80 et 120, plus préférentiellement encore entre 90 et 110 fils/dm ;
- les densités $d_2$ et $d_3$ sont comprises entre 110 et 170, plus préférentiellement encore entre 120 et 160 fils/dm.

D'autre part et selon un autre mode de réalisation préférentiel de l'invention, au moins une des caractéristiques suivantes est vérifiée (plus préférentiellement les trois) :

- l'épaisseur moyenne $Ez_1$ de caoutchouc séparant un premier renfort (110) de la première couche (C1), du deuxième renfort (120, 125) de la deuxième couche (C2) qui lui est le plus proche, mesurée dans la direction radiale (Z), est inférieure à 0,40 mm, plus préférentiellement comprise entre 0,20 et 0,40 mm, en particulier entre 0,20 et 0,35 mm;
- l'épaisseur moyenne $Ez_2$ de caoutchouc séparant un deuxième renfort (120, 125) de la deuxième couche (C2), du troisième renfort (130, 135) de la troisième couche (C3) qui lui est le plus proche, mesurée dans la direction radiale (Z), est inférieure à 0,60 mm, plus préférentiellement comprise entre 0,35 et 0,60 mm, en particulier entre 0,35 et 0,55 mm ;
- l'épaisseur totale du stratifié composite multicouche, c'est-à-dire de ses trois couches (C1, C2, C3) superposées, mesurée selon la direction radiale Z, est comprise entre 1,8 et 2,7 mm, en particulier entre 2,0 et 2,5 mm.

Toutes les données indiquées précédemment (DI, D2, D3, Em, $d_1$, $d_2$, $d_3$, $Ez_1$, $Ez_2$ et épaisseur totale) sont des valeurs moyennes mesurées expérimentalement par un opérateur sur des photographies de coupes radiales de pneus vulcanisés, opérées dans la partie centrale de la ceinture, 5 cm de part et d'autre du plan médian (M), soit sur une largeur totale de 10 cm (soit entre - 5 cm et + 5 cm par rapport au plan médian M).

Les figures 2 et 3 représentent de manière schématique (sans respect d'une échelle spécifique), en coupe transversale, deux exemples de stratifié composite multicouche (10a, 10b, 10c; 20a, 20b, 20c) utilisé comme ceinture (10, 20) dans le pneu (1) conforme à l'invention de la figure 1, le stratifié (10, 20) incorporant :

- des renforts (110) en matériau textile thermorétractile (par exemple en polyester ou polyamide) respectivement sous la forme d'un assemblage de trois mono filaments (Fig. 2) ou d'un simple monofilament unitaire (Fig. 3) ;
- des deuxièmes (120, 125) et/ou troisièmes (130, 135) renforts composites comportant des monofilaments en acier (120a, 125a; 130a, 135 a) qui sont recouverts d'une gaine (120b, 125b; 130b, 135b) d'une matière thermoplastique de Tg est supérieure à 20°C, par exemple en polyester ou en polyamide.

A titre d'exemples, la gaine peut être circulaire (120b ou 130b; Fig. 2b et 2c) ou bien rectangulaire ou carrée (125b ou 135b ; Fig. 3b et 3c). Elle pourrait aussi être par exemple de forme oblongue.

Les monofilaments en acier gainés par la matière thermoplastique peuvent être gainés individuellement comme indiqué à titre d'exemples aux figures 2b, 2c, 3b et 3c, ceci constituant un mode de réalisation préférentiel. Mais, selon un autre mode de réalisation préférentiel, c'est plusieurs monofilaments en acier (tout ou partie des renforts 120, 125 et/ou 130, 135 du stratifié) qui pourraient être collectivement gainés par la même gaine thermoplastique, comme indiqué à titre d'exemple à la figure 3d où le renfort final 135 est ici constitué de 4 mono filaments en acier (135a) qui ont été gainés collectivement par une gaine unique de matière thermoplastique (135b).

Il est à souligner que l'utilisation d'une même matière thermoplastique, par exemple polyester ou polyamide, pour constituer d'une part le matériau textile thermorétractile et d'autre part la matière gainant les monofilaments en acier, peut être particulièrement avantageuse puisque aucun problème de compatibilité ne se pose alors entre les renforts respectifs, en particulier en cas de contact direct parasite entre ces derniers.

Comme illustré aux figures 2 et 3, $Ez_1$ est la moyenne des épaisseurs ($Ez_{1(1)}$, $Ez_{1(2)}$, $Ez_{1(3)}$, ..., $Ez_{1(i)}$) de caoutchouc séparant un premier renfort (110) du deuxième renfort (120, 125) qui lui est le plus proche, ces épaisseurs étant chacune mesurées dans la direction radiale Z, et moyennées sur une distance axiale totale comprise entre - 5,0 cm et + 5,0 cm par rapport au centre de la ceinture (soit, par exemple au total environ 100 mesures si l'on trouve dix renforts (110) par cm dans la couche C1).

Exprimé autrement, $Ez_1$ est la moyenne des distances minimales $Ez_{1(i)}$ séparant « dos à dos » chaque premier renfort (110) du deuxième renfort (120, 125), bien entendu gaine comprise, qui lui est le plus proche dans la direction radiale Z, cette moyenne étant calculée sur l'ensemble des premiers renforts (110) présents dans la partie centrale de la ceinture, dans un intervalle axial s'étendant entre - 5 cm et + 5 cm par rapport au plan médian M.

De même, $Ez_2$ est la moyenne des épaisseurs de caoutchouc ($Ez_{2(1)}$, $Ez_{2(2)}$, $Ez_{2(3)}$, ..., $Ez_{2(i)}$) séparant un deuxième renfort (120, 125) du troisième renfort (130, 135) qui lui est le plus proche, mesurées dans la direction radiale Z, cette moyenne étant calculée sur une distance axiale totale comprise entre - 5,0 cm et + 5,0 cm par rapport au centre de la ceinture. Exprimé différemment, ces épaisseurs représentent les distances minimales qui séparent « dos à dos » le deuxième renfort (120, 125) du troisième renfort (130, 135) qui lui est le plus proche dans la direction radiale Z.

Exprimé différemment, $Ez_2$ est la moyenne des distances minimales $Ez_{2(i)}$ séparant « dos à dos » chaque deuxième renfort (120, 125) du troisième renfort (130, 135), bien entendu gaines comprises, qui lui est le plus proche dans la direction radiale Z, cette moyenne étant calculée sur l'ensemble des deuxièmes renforts (120, 125) présents dans la partie centrale de la ceinture, dans un intervalle axial s'étendant entre - 5 cm et + 5 cm par rapport au plan médian M.

Pour une performance optimisée en termes de résistance au roulement, poussée de dérive et endurance au roulage, le pneumatique de l'invention vérifie préférentiellement au moins une des inégalités suivantes (plus préférentiellement les trois) :

$$0{,}15 < Ez_1 \, / \, (Ez_1 + D1 + D2) < 0{,}30$$

$$0{,}20 < Ez_2 \, / \, (Ez_2 + D2 + D3) < 0{,}50$$

$$0{,}20 < (Ez_1 + Ez_2) \, / \, (Ez_1 + Ez_2 + D1 + D2 + D3) < 0{,}40.$$

En conclusion, l'invention offre la possibilité de maintenir à un bas niveau voire même de réduire encore l'épaisseur des ceintures de pneumatiques et celle des couches de caoutchouc constituant une partie de leur structure, *in fine* le poids et la résistance au roulement des pneumatiques, sans risque de contact direct entre les différents renforts. Le stratifié composite multicouche est mieux protégé de l'humidité grâce à l'emploi dans sa première couche de monofils ou assemblages de monofils textiles thermorétractiles.

La gaine thermoplastique constitue en outre une barrière efficace contre les agents corrosifs susceptibles de pénétrer dans le stratifié multicouche en cas d'agressions du pneumatique. Enfin, cette gaine présentant une rigidité intermédiaire entre celles des monofils en acier et de la matrice de caoutchouc les enrobant, les contraintes exercées aux interfaces sont réduites, ce qui est susceptible d'améliorer l'endurance globale du stratifié composite multicouche du pneumatique de l'invention.

**Revendications**

1. Pneumatique radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10, 20) s'étendant dans le sommet (2) selon la direction circonférentielle (X) et situé radialement entre l'armature de carcasse (7) et la bande de roulement (3), ladite ceinture (10) comportant un stratifié composite multicouche (10a, 10b, 10c ; 20a, 20b, 20c) comportant au moins trois couches superposées de renforts (110, 120, 130 ; 111, 125, 135), lesdits renforts étant dans chaque couche unidirectionnels et noyés dans une épaisseur de caoutchouc (respectivement C1, C2, C3), avec :

   - côté bande de roulement, une première couche (10a, 20a) de caoutchouc (C1) comportant une première rangée de renforts (110, 111), orientés selon un angle alpha de -5 à +5 degrés par rapport à la direction circonférentielle (X), ces renforts (110, 111) dits premiers renforts étant en matériau textile thermorétractile ;
   - au contact de la première couche (10a, 20a) et disposée sous cette dernière, une deuxième couche (10b, 20b) de caoutchouc (C2) comportant une deuxième rangée de renforts (120, 125), orientés selon un angle beta donné, positif ou négatif, compris entre 10 et 30 degrés par rapport à la direction circonférentielle (X), ces renforts (120, 125) dits deuxièmes renforts ayant un diamètre ou épaisseur, noté(e) D2, compris(e) entre 0,20 mm et 0,50 mm ;
   - au contact de la deuxième couche (10b, 20b) et disposée sous cette dernière, une troisième couche (10c, 20c) de caoutchouc (C3) comportant une troisième rangée de renforts (130, 135), orientés selon un angle gamma opposé à l'angle beta, lui-même compris entre 10 et 30 degrés par rapport à la direction circonférentielle (X), ces renforts (130, 135) dits troisièmes renforts ayant un diamètre ou épaisseur, noté(e) D3, compris(e) entre 0,20 mm et 0,50 mm,

   **caractérisé en ce que** tout ou partie des deuxièmes et/ou troisièmes renforts sont des renforts composites comportant des mono filaments en acier (120a, 130a; 125a, 135a) qui sont recouverts d'une gaine (120b, 130b; 125b, 135b) d'une matière thermoplastique dont la température de transition vitreuse Tg est supérieure à 20°C.

2. Pneumatique selon la revendication 1, dans lequel l'épaisseur minimale notée Em de la gaine thermoplastique (120b, 130b; 125b, 135b) recouvrant les monofilaments (120a, 130a) en acier des deuxièmes (120, 125) et/ou troisièmes (130, 135) renforts composites est comprise entre 5 et 150 $\mu$m, de préférence entre 10 et 100 $\mu$m.

3. Pneumatique selon l'une quelconque des revendications 1 à 2, dans lequel Tg est supérieure à 50°C, de préférence supérieure à 70°C.

4. Pneumatique selon l'une quelconque des revendications 1 à 3, dans lequel la matière thermoplastique est un polymère ou une composition de polymère.

5. Pneumatique selon l'une quelconque des revendications 1 à 4, dans lequel le diamètre d'encombrement noté D1 des premiers renforts (110) est compris entre 0,20 mm et 1,20 mm.

6. Pneumatique selon l'une quelconque des revendications 1 à 5, dans lequel la densité $d_1$ des premiers renforts (110) dans la première couche de caoutchouc (C1), mesurée dans la direction axiale (Y), est comprise entre 70 et 130 fils/dm.

7. Pneumatique selon l'une quelconque des revendications 1 à 6, dans lequel tout ou partie des premiers renforts (110) en matériau textile thermorétractile sont des mono filaments de diamètre ou épaisseur $\varphi$ supérieur(e) à 0,10 mm, ou des assemblages de tels mono filaments.

8. Pneumatique selon l'une quelconque des revendications 1 à 7, dans lequel le matériau textile thermorétractile constitutif des premiers renforts (110) est un polyamide ou un polyester.

9. Pneumatique selon l'une quelconque des revendications 1 à 8, dans lequel la contraction thermique notée CT des premiers renforts (110) en matériau textile thermorétractile, après 2 min à 185°C, est inférieure à 7,5%.

10. Pneumatique selon l'une quelconque des revendications 1 à 9, dans lequel la densité, respectivement $d_2$ et $d_3$, des deuxièmes (120, 125) et troisièmes (130, 135) renforts dans respectivement les deuxième (C2) et troisième (C3) couches de caoutchouc, mesurée dans la direction axiale (Y), est comprise entre 100 et 180 fils/dm.

11. Pneumatique selon l'une quelconque des revendications 1 à 10, dans lequel la caractéristique suivante, mesurée dans la partie centrale de la ceinture du pneumatique à l'état vulcanisé, de part et d'autre du plan médian (M) sur une largeur axiale totale de 10 cm, est vérifiée :

- l'épaisseur moyenne $Ez_1$ de caoutchouc séparant un premier renfort (110) du deuxième renfort (120, 125) qui lui est le plus proche, mesurée dans la direction radiale (Z), est inférieure à 0,40 mm, de préférence comprise entre 0,20 et 0,40 mm.

12. Pneumatique selon l'une quelconque des revendications 1 à 11, dans lequel la caractéristique suivante, mesurée dans la partie centrale de la ceinture du pneumatique à l'état vulcanisé, de part et d'autre du plan médian (M) sur une largeur axiale totale de 10 cm, est vérifiée :

- l'épaisseur moyenne $Ez_2$ de caoutchouc séparant un deuxième renfort (120, 125) du troisième renfort (130, 135) qui lui est le plus proche, mesurée dans la direction radiale (Z), est inférieure à 0,60 mm, de préférence comprise entre 0,35 et 0,60 mm.

13. Pneumatique selon la revendication 11 ou une combinaison des revendications 11 et 12, dans lequel l'inégalité suivante est vérifiée :

$$0,15 < Ez_1 / (Ez_1 + D1 + D2) < 0,30$$

14. Pneumatique selon la revendication 12 ou une combinaison des revendications 12 et 13, dans lequel l'inégalité suivante est vérifiée :

$$0,20 < Ez_2 / (Ez_2 + D2 + D3) < 0,50$$

15. Pneumatique selon une combinaison des revendications 11 et 12 ou 11 à 13 ou 11 à 14, dans lequel l'inégalité suivante est vérifiée :

$$0,20 < (Ez_1 + Ez_2) / (Ez_1 + Ez_2 + D1 + D2 + D3) < 0,40$$

**Patentansprüche**

1. Radialreifen (1), welcher drei Hauptrichtungen, nämlich über den Umfang (X), axial (Y) und radial (Z), definiert, aufweisend einen Scheitel (2), welcher von einer Reifenlauffläche (3) überdeckt wird, zwei Flanken (4), zwei Wülste (5), wobei jede Flanke (4) jede Wulst (5) mit dem Scheitel (2) verbindet, eine Karkassenbewehrung (7), die in den beiden Wülsten (5) verankert ist und sich in den Flanken (4) bis zu dem Scheitel (2) erstreckt, eine Scheitel- oder Gürtelbewehrung (10, 20), welche sich in dem Scheitel (2) gemäß der Umfangsrichtung (X) erstreckt und radial zwischen der Karkassenbewehrung (7) und der Reifenlauffläche (3) angeordnet ist, wobei der Gürtel (10) ein mehrschichtiges Verbundlaminat (10a, 10b, 10c; 20a, 20b, 20c) aufweist, welches mindestens drei übereinander gelegte Verstärkungsschichten (110, 120, 130; 111, 125, 135) aufweist, wobei die Verstärkungen in jeder Schicht unidirektional und in einer Kautschuklage (jeweils C1, C2, C3) eingelassen sind, mit:

- einer ersten Schicht (10a, 20a) aus Kautschuk (C1) auf der Seite der Reifenlauffläche, welche eine erste Reihe von Verstärkungen (110, 111) aufweist, welche gemäß einem Winkel Alpha von -5 bis +5 Grad in Bezug auf die Umfangsrichtung (X) ausgerichtet sind, wobei diese Verstärkungen (110, 111), so genannte erste Verstärkungen, aus wärmeschrumpfendem textilen Material bestehen;

- einer, mit der ersten Schicht (10a, 20a) in Kontakt stehenden und unter dieser ersten angeordneten zweiten Schicht (10b, 20b) aus Kautschuk (C2), welche eine zweite Reihe von Verstärkungen (120, 125) aufweist, welche gemäß einem gegebenen positiven oder negativen Winkel Beta, der zwischen 10 und 30 Grad in Bezug auf die Umfangsrichtung (X) liegt, ausgerichtet sind, wobei diese Verstärkungen (120, 125), so genannte zweite Verstärkungen, einen oder eine mit D2 bezeichnete(n) Durchmesser oder Dicke aufweisen, welche(r) zwischen 0,20 mm und 0,50 mm liegt;

- einer, mit der zweiten Schicht (10b, 20b) in Kontakt stehenden und unter dieser zweiten angeordneten dritten Schicht (10c, 20c) aus Kautschuk (C3), welche eine dritte Reihe von Verstärkungen (130, 135) aufweist, welche gemäß einem dem Winkel Beta entgegengesetzten Winkel Gamma, welcher selbst zwischen 10 und 30 Grad in Bezug auf die Umfangsrichtung (X) liegt, ausgerichtet sind, wobei diese Verstärkungen (130, 135), so genannte dritte Verstärkungen, einen oder eine mit D3 bezeichnete(n) Durchmesser oder Dicke aufweisen, welche(r) zwischen 0,20 mm und 0,50 mm liegt;

**dadurch gekennzeichnet, dass** sämtliche oder ein Teil der zweiten und/oder dritten Verstärkungen Verbundverstärkungen mit Monofilamenten aus Stahl (120a, 130a; 125a, 135a) sind, welche mit einem Mantel (120b, 130b; 125b, 135b) aus einem thermoplastischen Material bedeckt sind, dessen Glasübergangstemperatur Tg größer als 20°C ist.

2. Reifen nach Anspruch 1, bei welchem die mit Em bezeichnete minimale Dicke des thermoplastischen Mantels (120b, 130b; 125b, 135b), welcher die Monofilamente (120a, 130a) aus Stahl der zweiten (120, 125) und/oder dritten (130, 135) Verbundverstärkungen bedeckt, zwischen 5 und 150 $\mu$m liegt, vorzugsweise zwischen 10 $\mu$m und 100 $\mu$m.

3. Reifen nach einem der Ansprüche 1 bis 2, bei welchem Tg größer als 50°C ist, vorzugsweise größer als 70°C.

4. Reifen nach einem der Ansprüche 1 bis 3, bei welchem das thermoplastische Material ein Polymer oder eine Polymerzusammensetzung ist.

5. Reifen nach einem der Ansprüche 1 bis 4, bei welchem der mit D1 bezeichnete Hauptdurchmesser der ersten Verstärkungen (110) zwischen 0,20 mm und 1,20 mm liegt.

6. Reifen nach einem der Ansprüche 1 bis 5, bei welchem die Dichte $d_1$ der ersten Verstärkungen (110) in der ersten Schicht aus Kautschuk (C1), welche in der axialen Richtung (Y) gemessen wird, zwischen 70 und 130 Fäden/dm liegt.

7. Reifen nach einem der Ansprüche 1 bis 6, bei welchem sämtliche oder ein Teil der ersten Verstärkungen (110) aus wärmeschrumpfendem textilen Material Monofilamente von einem Durchmesser oder einer Dicke $\varphi$ von größer als 0,10 mm oder Anordnungen derartiger Monofilamente sind.

8. Reifen nach einem der Ansprüche 1 bis 7, bei welchem das konstitutive, wärmeschrumpfende textile Material der ersten Verstärkungen (110) ein Polyamid oder ein Polyester ist.

9. Reifen nach einem der Ansprüche 1 bis 8, bei welchem die mit CT bezeichnete thermische Kontraktion der ersten Verstärkungen (110) aus wärmeschrumpfendem textilen Material nach 2 Min. bei 185°C kleiner als 7,5% ist.

10. Reifen nach einem der Ansprüche 1 bis 9, bei welchem die Dichte, jeweils $d_2$ und $d_3$, der zweiten (120, 125) und dritten (130, 135) Verstärkungen in jeweils der zweiten (C2) und dritten (C3) Schicht aus Kautschuk, welche in der axialen Richtung (Y) gemessen wird, zwischen 100 und 180 Fäden/dm liegt.

11. Reifen nach einem der Ansprüche 1 bis 10, bei welchem das folgende Merkmal, welches im zentralen Abschnitt des Gürtels des Reifens im vulkanisierten Zustand beiderseits der Mittelebene (M) über eine gesamte axiale Breite von 10 cm gemessen wird, erfüllt ist:

- die mittlere Dicke $E_{Z1}$ aus Kautschuk, welche eine erste Verstärkung (110) von der zweiten Verstärkung (120, 125), die ihr am nächsten ist, trennt, ist kleiner als 0,40 mm, liegt vorzugsweise zwischen 0,20 und 0,40 mm, wenn sie in der radialen Richtung (Z) gemessen wird.

12. Reifen nach einem der Ansprüche 1 bis 11, bei welchem das folgende Merkmal, welches im zentralen Abschnitt des Gürtels des Reifens im vulkanisierten Zustand beiderseits der Mittelebene (M) über eine gesamte axiale Breite von 10 cm gemessen wird, erfüllt ist:

- die mittlere Dicke $E_{Z2}$ aus Kautschuk, welche eine erste Verstärkung (120, 125) von der dritten Verstärkung (130, 135), die ihr am nächsten ist, trennt, ist kleiner als 0,60 mm, liegt vorzugsweise zwischen 0,35 und 0,60 mm, wenn sie in der radialen Richtung (Z) gemessen wird.

13. Reifen nach Anspruch 11 oder einer Kombination der Ansprüche 11 und 12, bei welchem die folgende Ungleichung erfüllt ist:

$$0,15 < E_{Z1} / (E_{Z1} + D1 + D2) < 0,30$$

14. Reifen nach Anspruch 12 oder einer Kombination der Ansprüche 12 und 13, bei welchem die folgende Ungleichung erfüllt ist:

$$0,20 < E_{Z2} / (E_{Z2} + D2 + D3) < 0,50$$

15. Reifen nach einer Kombination der Ansprüche 11 und 12 oder 11 bis 13 oder 11 bis 14, bei welchem die folgende Ungleichung erfüllt ist:

$$0,20 < (E_{Z1} + E_{Z2}) / (E_{Z1} + E_{Z2} + D1 + D2 + D3) < 0,40$$

**Claims**

1. Radial tyre (1), defining three main directions, circumferential (X), axial (Y) and radial (Z), comprising a crown (2) surmounted by a tread (3), two sidewalls (4), two beads (5), each sidewall (4) connecting each bead (5) to the crown (2), a carcass reinforcement (7) that is anchored in each of the beads (5) and extends in the sidewalls (4) to the crown (2), a crown reinforcement or belt (10, 20) that extends in the crown (2) in the circumferential direction (X) and is situated radially between the carcass reinforcement (7) and the tread (3), the said belt (10) comprising a multilayer composite laminate (10a, 10b, 10c; 20a, 20b, 20c) comprising at least three superposed layers of reinforcers (110, 120, 130; 111, 125, 135), the said reinforcers being unidirectional within each layer and embedded in a thickness of rubber (C1, C2, C3, respectively), with:

- on the tread side, a first layer (10a, 20a) of rubber (C1) comprising a first row of reinforcers (110, 111) which are oriented at an angle alpha of -5 to +5 degrees with respect to the circumferential direction (X), these reinforcers (110, 111), referred to as first reinforcers, being made of a heat-shrinkable textile material;
- in contact with the first layer (10a, 20a) and disposed beneath the latter, a second layer (10b, 20b) of rubber (C2) comprising a second row of reinforcers (120, 125) which are oriented at a given angle beta, which is positive or negative, of between 10 and 30 degrees with respect to the circumferential direction (X), these reinforcers (120, 125), referred to as second reinforcers, having a diameter or thickness, denoted D2, of between 0.20 mm and 0.50 mm;
- in contact with the second layer (10b, 20b) and disposed beneath the latter, a third layer (10c, 20c) of rubber (C3) comprising a third row of reinforcers (130, 135) which are oriented at an angle gamma the opposite of the angle beta, itself being between 10 and 30 degrees with respect to the circumferential direction (X), these reinforcers (130, 135), referred to as third reinforcers, having a diameter or thickness, denoted D3, of between 0.20 mm and 0.50 mm,

**characterized in that** all or part of the second and/or third reinforcers are composite reinforcers comprising steel monofilaments (120a, 130a; 125a, 135a) which are covered with a sheath (120b, 130b; 125b, 135b) of a thermoplastic material the glass transition temperature Tg of which is higher than 20°C.

2. Tyre according to Claim 1, in which the minimum thickness, denoted Em, of the thermoplastic sheath (120b, 130b; 125b, 135b) covering the steel monofilaments (120a, 130a) of the second (120, 125) and/or third (130, 135) composite reinforcers is between 5 and 150 μm, preferably between 10 and 100 μm.

3. Tyre according to any one of Claims 1 to 2, in which Tg is greater than 50°C, preferably greater than 70°C.

4. Tyre according to any one of Claims 1 to 3, in which the thermoplastic material is a polymer or a polymer composition.

5. Tyre according to any one of Claims 1 to 4, in which the envelope diameter denoted D1 of the first reinforcers (110) is between 0.20 mm and 1.20 mm.

6. Tyre according to any one of Claims 1 to 5, in which the density $d_1$ of the first reinforcers (110) in the first layer of rubber (C1), measured in the axial direction (Y), is between 70 and 130 threads/dm;

7. Tyre according to any one of Claims 1 to 6, in which all or some of the first reinforcers (110) made of heat-shrinkable textile material are monofilaments with a diameter or thickness φ greater than 0.10 mm, or assemblies of such monofilaments.

8. Tyre according to any one of Claims 1 to 7, in which the heat-shrinkable textile material of which the first reinforcers (110) are made is a polyamide or a polyester.

9. Tyre according to any one of Claims 1 to 8, in which the thermal contraction denoted CT of the first reinforcers (110) made of heat-shrinkable textile material, after 2 min at 185°C, is less than 7.5%.

10. Tyre according to any one of Claims 1 to 9, in which the density, $d_2$ and $d_3$, respectively, of the second (120, 125) and third (130, 135) reinforcers in the second (C2) and third (C3) layers of rubber respectively, measured in the axial direction (Y), is between 100 and 180 threads/dm.

11. Tyre according to any one of Claims 1 to 10, in which the following feature, measured in the central part of the belt of the tyre in the vulcanized state, on each side of the median plane (M) over a total axial width of 10 cm, is satisfied:

- the mean thickness $Ez_1$ of rubber separating a first reinforcer (110) from the second reinforcer (120, 125) closest to it, measured in the radial direction (Z), is less than 0.40 mm, preferably between 0.20 and 0.40 mm.

12. Tyre according to any one of Claims 1 to 11, in which the following feature, measured in the central part of the belt of the tyre in the vulcanized state, on each side of the median plane (M) over a total axial width of 10 cm, is satisfied:

- the mean thickness $Ez_2$ of rubber separating a second reinforcer (120, 125) from the third reinforcer (130, 135) closest to it, measured in the radial direction (Z), is less than 0.60 mm, preferably between 0.35 and 0.60 mm.

13. Tyre according to Claim 11 or a combination of Claims 11 and 12, in which the following inequality is satisfied:

$$0.15 < Ez_1 \, / \, (Ez_1 + D1 + D2) < 0.30.$$

14. Tyre according to Claim 12 or a combination of Claims 12 and 13, in which the following inequality is satisfied:

$$0.20 < Ez_2 \, / \, (Ez_2 + D2 + D3) < 0.50.$$

15. Tyre according a combination of Claims 11 and 12 or 11 to 13 or 11 to 14, in which the following inequality is satisfied:

$$0.20 < (Ez_1 + Ez_2) \, / \, (Ez_1 + Ez_2 + D1 + D2 + D3) < 0.40.$$

## Fig. 1

# Fig. 2

## Fig. 2a

## Fig. 2b

## Fig. 2c

# Fig. 3

## Fig. 3a

## Fig. 3b

## Fig. 3c

## Fig. 3d

# **Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4371025 A
- FR 2504067
- US 4819705 A
- EP 738615 A
- EP 795426 A
- US 5858137 A
- EP 1162086 A
- US 20020011296 A
- EP 1184203 A
- US 20020055583 A
- WO 2013117476 A
- WO 2013117477 A
- EP 2380754 A
- EP 2505386 A
- FR 3008998
- EP 0621143 A
- EP 2123480 A
- WO 2013117474 A
- WO 2013117475 A
- WO 2010136389 A
- WO 2010105975 A
- WO 2011012521 A
- WO 2011051204 A
- WO 2012016757 A
- WO 2012038340 A
- WO 2012038341 A
- WO 2012069346 A
- WO 2012104279 A
- WO 2012104280 A
- WO 2012104281 A
- WO 2013017421 A
- WO 2013017422 A
- WO 2013017423 A
- FR 1495730
- FR 2022643
- US 3638706 A
- FR 2577478
- US 4724881 A
- EP 500480 A
- US 5442903 A
- EP 517870 A
- US 5427165 A
- WO 2010143017 A

**Littérature non-brevet citée dans la description**

- **B. YILMAZ.** Investigation of twisted monofilament cord properties made ofnylon 6.6 and polyester. *Fibers and Polymers,* 2011, vol. 12 (8), 1091-1098